Europäisches Patentamt

European Patent Office

Office européen des brevets

(11) Publication number: **0 124 951**
**A2**

# (12) EUROPEAN PATENT APPLICATION

(21) Application number: **84200662.9**

(22) Date of filing: **07.05.84**

(51) Int. Cl.³: **B 29 F 1/022**
**B 29 F 1/00, B 29 F 1/14**
**B 65 D 1/26, B 65 D 1/46**

(30) Priority: **14.07.83 NL 8302531**
**06.05.83 NL 8301619**

(43) Date of publication of application:
**14.11.84 Bulletin 84/46**

(84) Designated Contracting States:
**AT BE CH DE FR GB IT LI LU NL SE**

(71) Applicant: **van Noort, Jacob**
**Corleseweg 24**
**NL-7102 EV Winterswijk(NL)**

(72) Inventor: **van Noort, Jacob**
**Corleseweg 24**
**NL-7102 EV Winterswijk(NL)**

(74) Representative: **Konings, Lucien Marie Cornelis**
**Joseph et al,**
**OCTROOIBUREAU ARNOLD & SIEDSMA Sweelinckplein**
**1**
**NL-2517 GK Den Haag(NL)**

(54) Method, injection moulding machine and injection mould for producing holder shaped products, holder shaped products and hot runner system.

(57) During injection moulding container-like objects a mould cavity of a mould is bounded by a core and a jacket divided in its longitudinal direction into two jacket parts. This mould is opened and closed by a relative axial displacement of the core on the one hand and of the jacket on the other, and by a relative radial displacement of the jacket parts.

./...

FIG.1

-1-

A method, an injection moulding machine and an injection mould for the manufacture of container-like objects, container-like objects and a hot runner system.

The invention relates to a method of manufacturing container-like objects, in which synthetic resin in the liquid state is injected into a mould cavity, which is bounded by a jacket and a core extending in a penetration direction into the interior of the jacket.

In this method, after injection moulding of an object, the injection mould and the core are relatively displaced over a large distance in the penetration direction in order to remove the object. This requires much energy and/or much unused time and gives rise to heavy wear of the moving elements.

The invention has for its object to save energy and/or time in removing the ready objects.

For this purpose at least two adjoining, relatively movable parts of the jacket are moved away from and towards the core respectively in a direction transverse of the penetration direction during opening and closing of the mould cavity. The manufactured object can then be removed in the penetration direction from the core after a comparatively slight relative displacement of the jacket parts.

The invention furthermore relates to and provides a injection moulding machine as defined in claims 2-20 and a injection mould as defined in claims 20-27 and claim 30, a hot runner system defined in claims 28 and 29 and a container-like object defined in claim 31.

The invention will be described more fully hereinafter with reference to the drawing.

The drawing schematically shows in:

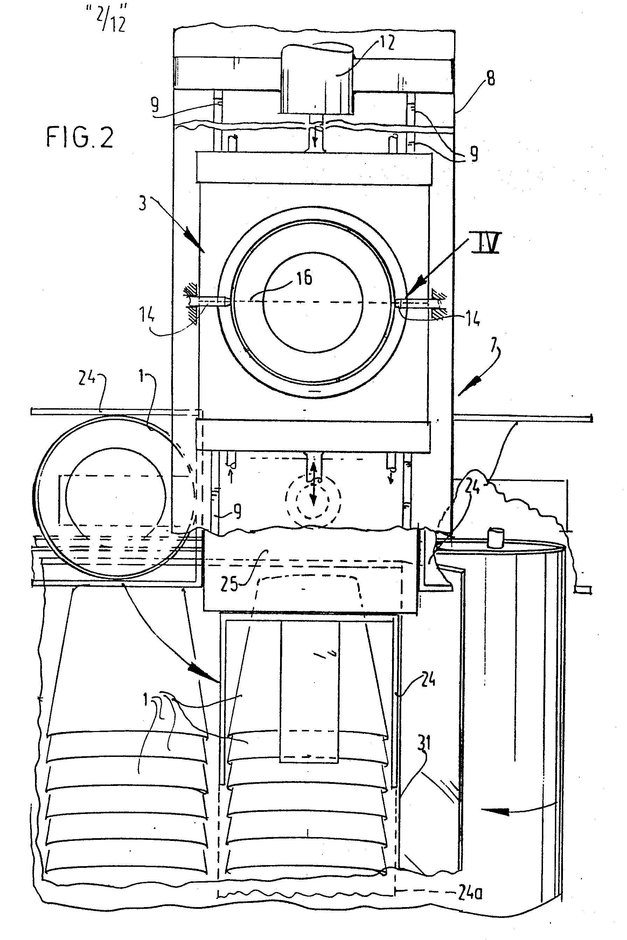

Figs. 1 and  2 a vertical sectional view and a plan view respectively of a preferred embodiment of a injection moulding machine in accordance with the invention,

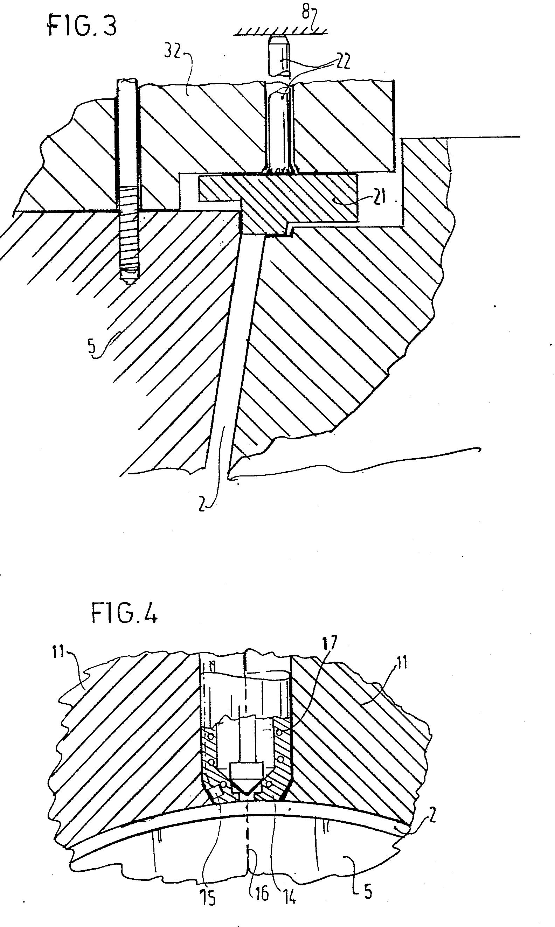

Fig. 3 on an enlarged scale detail III of Fig. 1,

Fig. 4 on an enlarged scale detail IV of Fig. 2,

Fig. 5 on a reduced scale the device of Fig. 1 provided with a further developed packing device,

Fig. 6 a vertical sectional view of another spray-casting machine embodying the invention,

Fig. 7 a plan view of part of a further injection moulding machine embodying the invention,

Figs. 8 and 9 vertical sectional views taken on the lines VIII-VIII and IX-IX respectively in Fig. 7,

Fig. 10 on an enlarged scale detail X of Fig. 9,

Fig. 11 on an enlarged scale detail XI of Fig. 10,

Fig. 12 a horizontal sectional view of a specific injection mould embodying the invention,

Fig. 13 an object that can be made by the injection mould of Fig. 12, and

Fig. 14 a vertical sectional view, partly an elevational view of a further injection moulding machine embodying the invention.

For manufacturing an object 1, for example, a flower pot of frustoconical configuration or a different container-like object, synthetic resin is sprayed in the liquid state into a mould cavity 2 of a injection mould 3. This mould cavity 2 is bounded by a jacket 4 and a core 5 extending in a penetration direction 6 into the interior of the jacket 4.

An injection moulding machine 7 comprises a frame 8 with guide rails 9 rigidly secured thereto. The jacket 4 consists of two bottom parts in jacket parts 10, which are movable with respect to the core in a direction transverse of the penetration direction by means of hydraulic rams 12, whilst being guided along the rails 9. The core 5 is movable over a small distance of, for example, 5 mms in its penetration direction 6 with respect to the frame 8. The core 5 and the jacket parts 10 are cooled each by a known cooling system 13. Two injection nozzles 14 are connected diametrically opposite one another with the mould cavity 2 of the injection mould 3. Thus the object 1, for example, a flower pot of extremely thin wall thickness of, for example, 0.3 mms can be cast. This means considerable saving of material, which is particularly important for disposable objects, for example, for packing purposes. These two nozzles 14 are arranged on the dividing line 16 between the jacket parts 10 and sealed and are each provided with a thermo-element 15 and a heating element 17, which form part of a control-device for equalizing the temperature of the emerging synthetic resin and hence of the flow rate of the two nozzles 14.

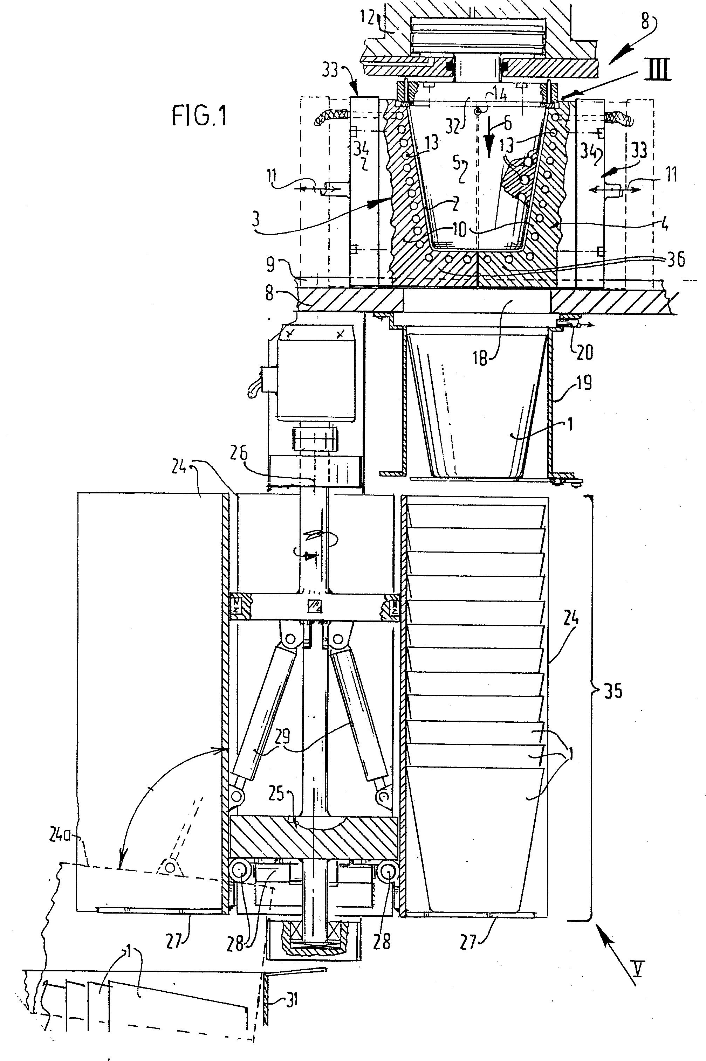

The frame 8 has a central outlet 18 for objects straight opposite i.e. straight below the core 5. This outlet 18 is concentric with the adjoining outlet cylinder 19, which communicated with an air suction pump through a suction duct 20 for creating subatmospheric pressure in the outlet 18. In this way manufactered objects 1 are rapidly conducted away in downward direction. In the closed state of the injection mould 3 of Fig. 1 the hot synthetic resin is sprayed into the mould cavity 2. This resin cures fast owing to cooling of the core 5 and the jacket 4. Then by energizing the ram 12 the core 5 is slightly moved upwards, after which the jacket parts 10 can be moved away for the core 5 in the direction 11 over a distance such that a downward free exit is formed for the object 1.

During the upward movement of the core 5 the object shrunk thereto as well as a stop ring 21 bounding the top side of the mould cavity 2 and being carried along by the object move upwards until the abutting ring 21 strikes the frame 8 through pins 22. Thus the object 1 is released from the core. As the case may be, additional air supply may be used to blow the object downwards. Below the outlet cylinder 19 is disposed a sequence of four receptacles 24 of a packing device 35. These four receptacles 24 are formed by U-shaped sleeves arranged at equal angular interval on a carrier 25 journalled in the frame 8 so as to be rotatable about a vertical axis 26. Each receptacle 24 has a bottom 27 and is pivotally connected with the carrier 25 by means of a pivot 28. By actuating a hydraulic ram 29 the receptacle 24 can be tilted in a discharging position 24a above an endless conveyor 31 provided with compartments 42 so that the stacks 43 of the objects contained in the receptacle 24 drop through the open side of the receptacle 24 down into compartments 42.

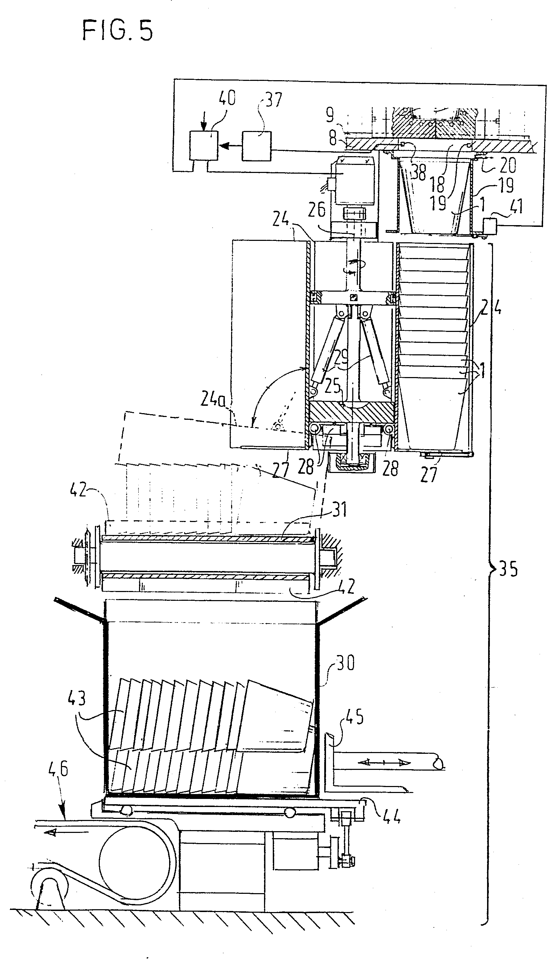

Fig. 5 shows that a light source 39 is arranged in the outlet 18 opposite a light-sensitive cell 38 connected to a counter 37. A control-member 40, in which the number of objects 1 per stack is set, controls the rotation of the carrier 25 and a closing member 41 of the outlet 18 so that during the rotation of the carrier 25 the dropping objects are captured by the closing member 41 after they have been counted. After opening the closing member 41 counting of the objects 1 normally continues. From the conveyor 31 the stacks 43 drop into a box 30 standing on a vibration table 44, which ensures that the stacks 43 completely fill the box 30. After the counter 37 has counted the number of objects intended for a box 30, a further box 30 is shifted by means of a pushing member 45 from the vibration table 44 to an adjoining conveyor 46, after which a new box 30 is automatically supplied below the conveyor 31.

The cycle time of the injection moulding machine 7 is short. The distances of displacement of the movable mould parts 5 and 11 are short so that the required energy is low. The consumption of material for each object is low. Briefly, the invention provides great advantages.

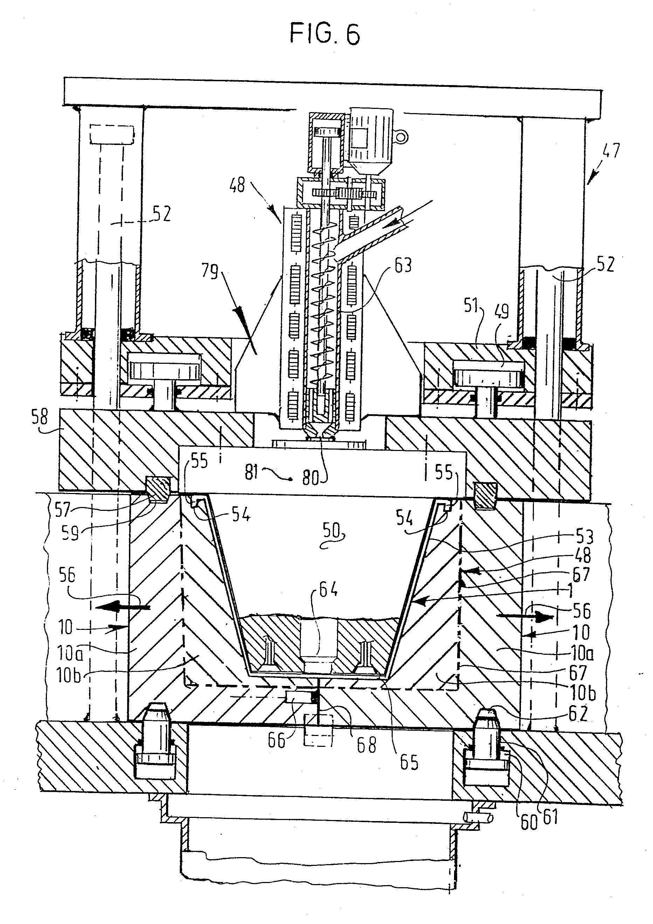

Fig. 6 shows a different injection moulding machine having a different injection mould 48. The rams 49 for lifting the core 50 by a small level difference are arranged in a support 51, which is displaceable by means of long rams 52 over a large level difference together with the core 50. in order to permit of removing an incomplete object made at the start of the injection moulding machine 47 form the core 50, whilst the injection mould 48 is fully open. The injection mould 48 has a mould cavity 53 having a downwardly extending groove 54 for moulding a bent-over rim 55 on the object 1. Since after injection moulding the object 1 adheres to the core 50, the rim 55 of the object 1 gets free of the groove 54 so that the jacket parts 10 are again allowed to move in the transverse direction 56 with respect to the core 50. When the injection mould 48 is closed conical pins 57 fastened to a top plate 58 penetrate into matching bores 59 of the jacket parts 10. On the underside of the jacket parts 10 upwardly and downwardly movable pins 61 penetrate by means of rams into bores 62 of the jacket parts 10. The injection moulding machine 47 comprises a centrally arranged helical cylinder 63 and an injection mould 48 with a vertical injection nozzle 64 arranged centrally in the core 50 and injected against the bottom 65 of the mould cavity 53 from within. On the dividing line 68 between the jacket parts 10 an approach sensor 66 is arranged, which blocks further operation of the injection moulding machine 47 in the event of unsufficient approach i.e. of incomplete closure. Likewise such sensors are arranged on the other faces of the injection mould 48. The dot-and-dash lines 67 indicate a separation between the jacket parts 10a of the injection moulding machine 47 permanently associated with the injection moulding machine 47 and the jacket parts 10b forming part of the injection mould 48; thus only smallest possible elements are required for each type of object in the injection mould 48.

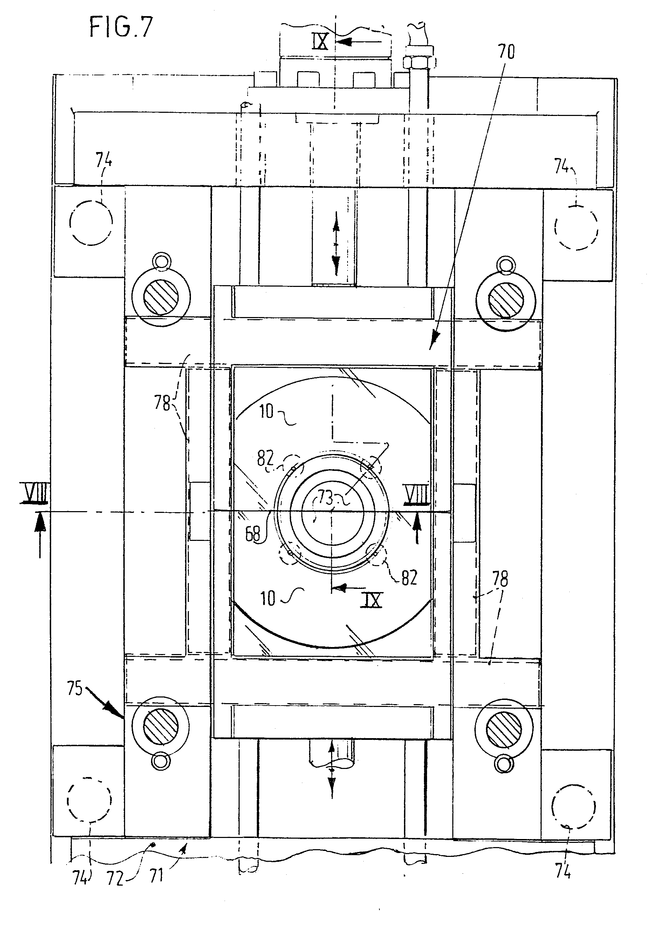

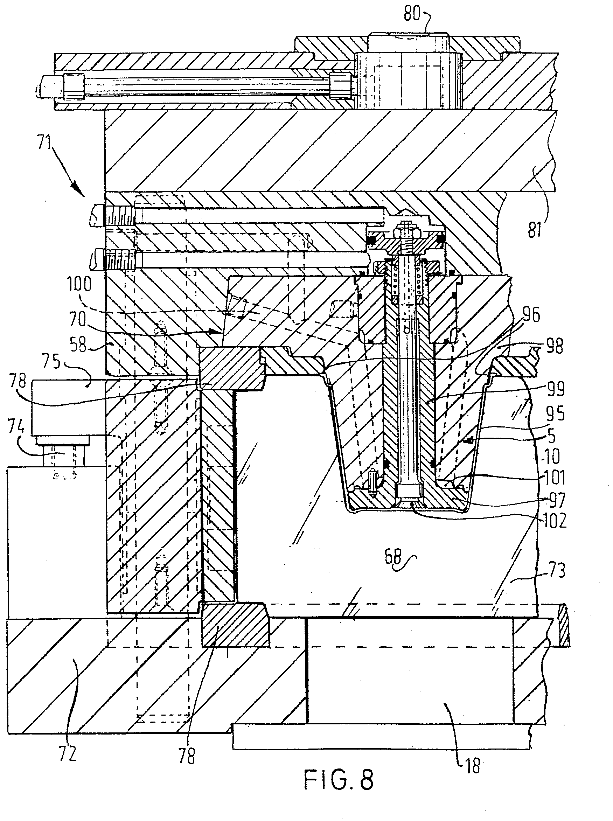

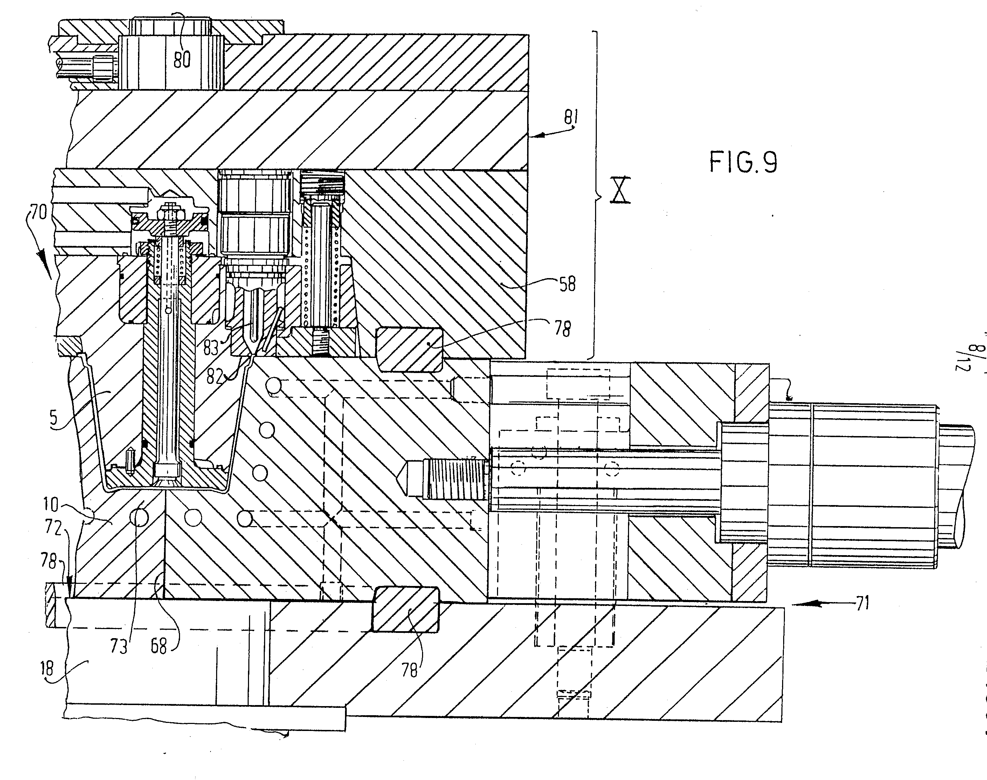

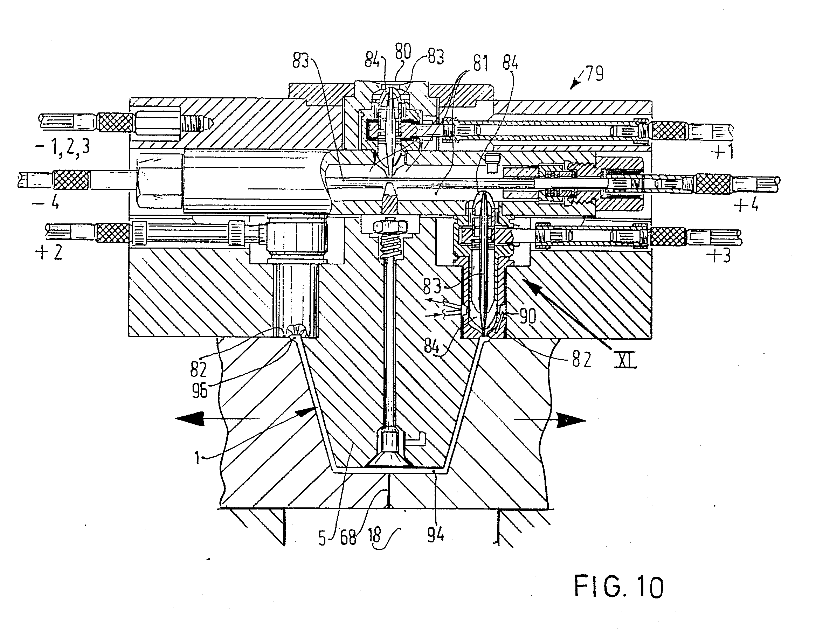

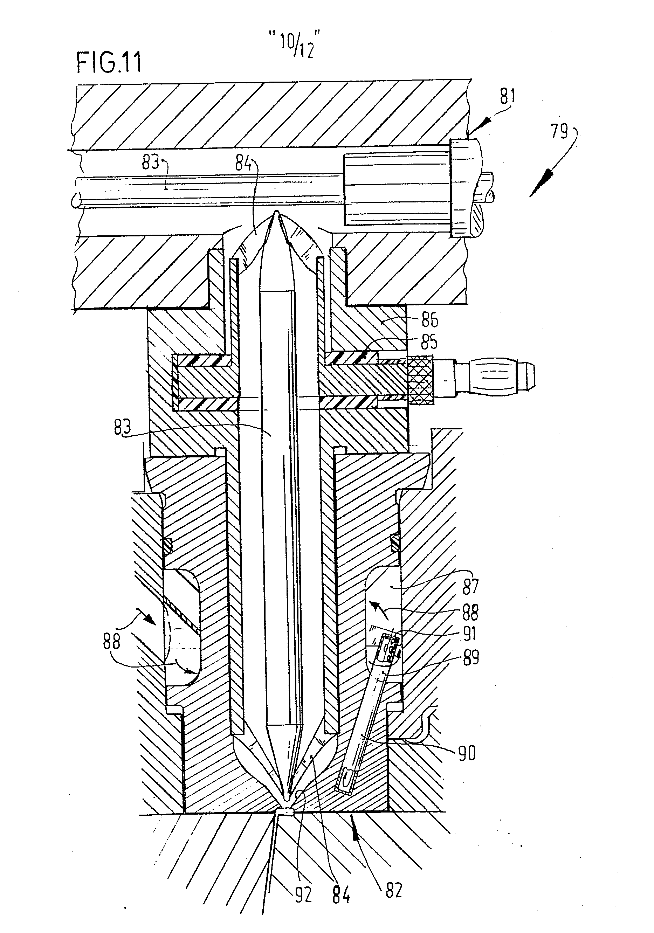

Figs. 7-11 show embodiments of injection moulds 70 and injection moulding machines 71 that can be quite suitaby contructed in practice. On a base plate 72 having a central outlet 18 jacket parts 10 having bottom parts 73 of the injection mould 70 are slidable in a horizontal, transverse direction with respect to the vertically directed core 5. Rams 74 lift a guide frame 75 on which the jacket parts 10 are slidably guided. Rams 49 lift the top plate 58 operating as a core carrier with the core 5 fastened thereto by a small level difference with respect to the jacket parts 10 in the manner described, in principle, with reference to Fig. 6, where also rams 52 are provided for lifting a support 51. Reference is particularly made to the fillets 78 of trapeziodal profile fastened to the top plate 58 and the lower plate 72 and engaging in matching grooves of the jacket parts 10 so that these fillets 78 absorb the high lateral pressure, which avoids the use of closing cylinders in this direction.

The injection mould 70 of Figs. 6 to 11 is provided with a hot runner system 79 in accordance with the invention. The helical cylinder 63 feeds a central, vertical inlet 80 ramified to form a horizontal crossing 81 communicating with four injection nozzles 82. Each channel of this hot runner system 79 has a central rod 83 heated by induction, which are positioned by means of bridges 84 and electrically energized. They are insulated by insulation means 85 in the housing 86 of the hot runner system 79. Each injection nozzle 82 is provided with a cooling channel 87 traversed by a flowing cooling medium in the direction of the arrows 88 and accommodating the end 89 of four heat pipes 90, which are very thin, for example, 3, 3.5, or 4 mms, each pipe being formed by a closed copper tube 91 containing a gas and/or a fluid, for examle, Freon gas, which condensates above at the cooling channel 87 and evaporates at the outlet opening 92 of the injection nozzle 82, where it extracts a high amount of heat. It is thus possible or the synthetic resin in the opening 92 to harden each time, even if in the case of a large number of charges per unit time the supply rate of hot synthetic resin is high. A high rate of hot synthetic resin tends to heat the no longer energized heating rods to an extrent such that they would be too hot at the opening 92. In this case the rate difference of the synthetic resin flowing out of the various injection nozzles 82 could no longer be controlled by cooling the heating elements 83 to a greater or lesser extent. According to the invention this can yet be done by using heat pipes 90, which require additional heating. In this way accurate equalization of the rates of flow from the injection nozzles 82 can be obtained so that the core 5 is charged on all sides to the same extent by affluent synthetic resin. It is thus possible to inject the products with thin walls. Injecting against the upper rim has the advantage that the bottom 94 of the object 1 can have a thinner wall. Also the jacket 95 of the object 1 may be thin-walled. The rim 96 of the object 1 is, however, thick-walled, since it determines the rigidity of the form.

The core 5 is divided into a lower piece 97 and an upper piece 98, in which the lower piece 97 is slidable by means of a central mandril 99. For this purpose, after the injection of synthtic resin into the mould cavity and after lifting the top plate 58 compressed air is supplied through channels 100 into a chamber 101 for pushing down the lower piece 97. At the same time the object 1 is slightly blown upwards by air escaping between the object and the outer side of the core. This lubricating air releases the object 1 from the core 5 and pushes the same away by a jet effect owing to the air escaping on the top side across the rim of the object 1. As the case may be, an air valve 102 may be provided centrally in the core, which valve is fed by compressed air so that also there, when the valve 102 is open, the pushing air can further the ejection of the object 1.

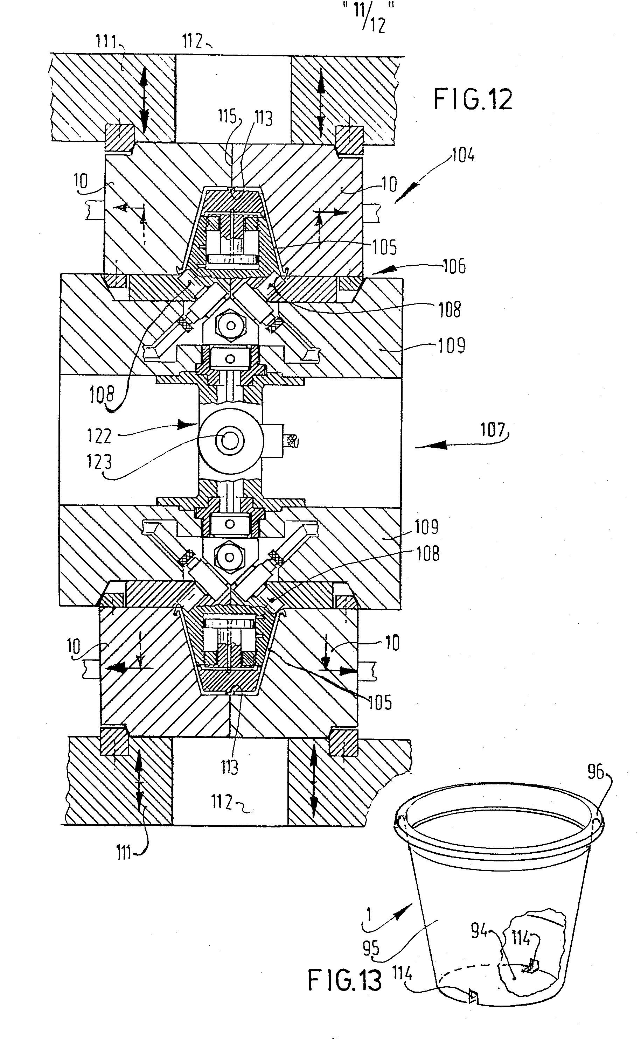

Fig. 12 shows that the injection moulding machine 104 can also operate horizontally, which means that the axial direction of the core and of the mould cavity is horizontal. As shown in Fig. 12 two mould cavities 105 of two injection moulds 106 combined into a single unit 107 are arranged opposite one another. For the disposition see Fig. 12. It shows 30 the injection inclined to the inner side of the mould cavities 105. A hot runner system 122 is provided with one central inlet 123 communicating with a helical cylinder. This central inlet is branched into hot runner channels, part of which is formed by the four injection nozzles 108 shown. In this injection moulding machine 104 the core carriers 109-move over a small distance relatively to one another when the mould cavity is opened and closed, whilst the jacket parts 10 are released.

The outer plates 111 with outlets 112 also move each time over a small distance. Fig. 13 shows the object 1 that can be manufactured by this injection moulding machine 104 and the injection mould of Fig. 12. Such a culture pot should have recesses 114 in the bottom 94. These recesses are obtained by means of recessing elements 113 provided on the dividing line 115 of the jacket parts 10.

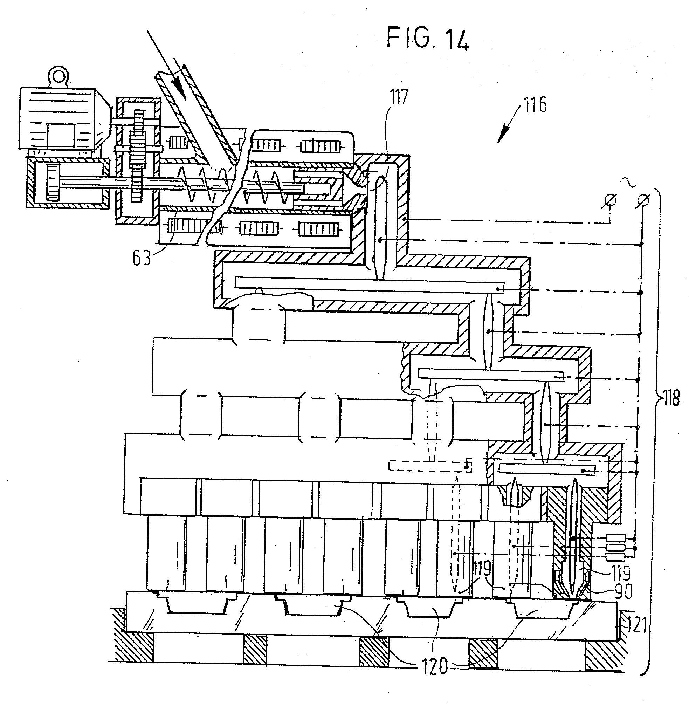

Fig. 14 shows part of the injection moulding machine 116 in which a helical cylinder is arranged horizontally, which may be advantageous in the case of large objects, since such a long helical cylinder can still be arranged in a building. This helical cylinder 63 communicates with the central inlet 117 of a hot runner system 118, which splits up each time so that each injection nozzle 119 receives the same affluent. In this manner a multiple of mould cavities 120 can be identically injected, in particular because of the use of the abovedescribed heat pipes 90. When using a injection mould 121 for four aligned mould cavities 120, the common dividing line of the jacket parts is chosen to lie in the plan of drawing of Fig. 14.

-1-

C L A I M S

1. A method of manufacturing container-like objects (1) in which synthetic resin is injected in the liquid state into a mould cavity (2), which is bounded by a jacket (4) and a core (5) entending in a penetration direction (6) into the interior of the jacket (4), characterized in that at least two adjoining, relatively movable jacket parts (10) of the jacket (4) are moved in a direction transverse of the penetration direction away from and towards the core (5) respectively during opening and closing of the mould cavity.

2. A method of manufacturing container-like objects (1) in which synthetic resin is injected in the liquid state into a mould cavity (2), which is bounded by a jacket (4) and a core (5) extending in a penetration direction (6) into the interior of the jacket (4), the jacket (4) being provided with a bottom, characterized in that at least two adjoining, relatively movable bottom parts of the jacket (4) are moved in a direction transverse of the penetration direction away from and towards the core (5) respectively during opening and closing of the mould cavity.

3. A method of manufacturing container-like objects (1) in which synthetic resin is injected in the liquid state by means of at least one heated injection nozzle into a mould cavity (2), which is bounded by a jacket (4) and a core (5) entending in a penetration direction (6) into the interior of the jacket (4), characterized in that the synthetic resin is injected by means of at least two injection nozzles into the mould cavity, in that the injection nozzles are each cooled and in that the injection nozzles are heated in an independent manner to set extent relatively differing so that the rate of flow is substantially the same with all injection nozzles.

4. A method as claimed in claim 3, characterized in that the injection nozzles are cooled by means of at least one gas- and/or fluid-filled, closed heat pipe.

5. A method as claimed in claim 1 or 3, characterized in that the bottom of the mould is injected centrally from the core.

6. An injection moulding machine (7) for manufacturing container-like objects (1) comprising a frame (8), a carrier (32) for a core (5) and a carrier (33) for a jacket (4), characterized in that the jacket carrier (33) comprises at least two jacket carrier parts (34), which are movable with respect to the core carrier (32) in a direction transverse of the penetration direction (6) of a core (5) to be mounted on the core carrier (32).

7. An injection moulding machine (7) as claimed in claim 6, characterized in that the jacket carrier parts (34) carry each a bottom part of the jacket.

8. An injection moulding machine (7) as claimed in claim 6 or 7, caracterized in that an outlet (18) for the manufactured objects (1) is provided opposite the core (5).

9. An injection moulding machine (7) as claimed in claim 8, characterized by a packing device (35) comprising at least two object receptables (24), which are movable between a charging position corresponding to the outlet (18) and a discharging position.

10. An injection moulding machine (7) as claimed in anyone of claims 6 to 9, characterized by at least two injection nozzles (14) that can be connected with one and the same nozzles (14) that can be connected with one and the same mould cavity of an injection mould (3).

11. An injection moulding machine (7) as claimed in anyone of claims 6 to 10, characterized by suction means (20) for creating subatmospheric pressure in the outlet (18).

12. An injection moulding machine (7) as claimed in anyone of claims 6 to 11, characterized in that the core carrier (32) is movable in its penetration direction (6) with respect to the frame.

13. An injection moulding machine (7) as claimed in anyone of claims 6 to 12, characterized by a counter for the objects passing through the outlet.

14. An injection moulding machine (7) as claimed in anyone of claims 6 to 13, characterized by a closing member blocking the outlet during the exchange of receptacles.

15. An injection moulding machine (7) as claimed in anyone of claims 6 to 14, characterized by a vibration table receiving at least one packing for positioning stacks of containers.

16. An injection moulding machine (7) as claimed in anyone of claims 6 to 15, characterized by a conveyor receiving a filled packing.

17. An injection moulding machine (7) as claimed in anyone of claims 6 to 16, characterized in that the axial direction of the core is horizontal.

18. An injection moulding machine (7) as claimed in claim 17, characterized in that it is designed to accommodate two oppositely disposed injection moulds.

19. An injection moulding machine (7) as claimed in anyone of claims 6 to 18, characterized by a hot runner system comprising a plurality of injection nozzles simultaneously injecting into one and the same injection mould.

20. An injection moulding machine (7) as claimed in anyone of claims 6 to 19, characterized by a hot runner system having a plurality of injection nozzles injecting a plurality of mould cavities.

21. An injection mould (3) for manufacturing container-like objects (1) comprising a jacket (4) bounding a mould cavity (2) and a core (5) extending in a penetration

-4-

direction (6) into the interior of the jacket (4) and bounding the mould cavity (2), characterized in that the jacket (4) is divided into at least two jacket parts (10) which are movable with respect to the core (5) in a direction (11) transverse of the penetration direction (6).5

22. An injection mould (3), characterized in that the bottom parts are each displaceable with respect to the core (5) transversely of the direction of length of the mould cavity.

23. An injection mould (3) as claimed in claim 21 or 22, characterized by recessing elements disposed on the dividing line of the bottom for making holes in the bottom of a container-like object (Figs. 12, 13).

24. An injection mould (3) as claimed in anyone of claims 21 to 23, characterized by at least one injection nozzle injecting against the inner side of the mould cavity.

25. An injection mould (3) as claimed in claim 24, characterized by an injection nozzle arranged centrally in the core and injecting against the bottom.

26. An injection mould (3) as claimed in anyone of claims 21 to 24, characterized by a plurality of injection nozzles injecting against the inner side of the mould cavity near the free rim of the object.

27. An injection mould (3) as claimed in anyone of claims 21 to 26, characterized by a hot runner system.

28. A hot runner system for injection moulding objects comprising a plurality of injection nozzles each provided with heating elements, characterized by a cooler for cooling the effluent end of the injection nozzles and by control means for controlling the relative temperature difference of the effluent ends of the plurality of injection nozzles.

29. A hot runner system as claimed in claim 28, characterized by a plurality of injection nozzles each provided with at least one gas- and/or fluid-filled heat pipe.

30. An injection mould (3) as claimed in anyone of claims 21 to 27, characterized by a hot runner system as claimed in claim 28 or 29.

31. A container-like object, characterized by a thin-walled bottom, a thin-walled jacket and a thick-walled, preferably profiled rim.

_._._._._

FIG.1

FIG.2

FIG.3

FIG.4

FIG.5

## FIG. 6

FIG.7

0124951

FIG. 8

2308.4

FIG.9

0124951

"8/12"

0124951

"9/12"

FIG. 10

FIG.11

"10/12"

111  112

FIG.12

115  113

104

10      10

105

106

108

109

108

122

123          107

109

108

10      10

105

113

112

111

96

1

94   114

FIG.13  114  95

FIG. 14